Europäisches Patentamt

European Patent Office

Office européen des brevets

(11) Veröffentlichungsnummer: **0 313 950**

**A2**

(12) **EUROPÄISCHE PATENTANMELDUNG**

(21) Anmeldenummer: 88117223.3

(22) Anmeldetag: 17.10.88

(51) Int. Cl.4: **C08G 63/18**

(30) Priorität: 29.10.87 DE 3736650

(43) Veröffentlichungstag der Anmeldung:
03.05.89 Patentblatt 89/18

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Tacke, Peter, Dr.**
**Brandenburger Strasse 12**
**D-4150 Krefeld(DE)**
Erfinder: **Grigo, Ulrich, Dr.**
**Michelsheide 9**
**D-4152 Kempen 3(DE)**
Erfinder: **Idel, Karsten, Dr.**
**Am Schwarzkamp 38**
**D-4150 Krefeld(DE)**

(54) **Verfahren zur Herstellung von aromatischen Polyestern.**

(57) Die Herstellung aromatischer Polyester auf Basis
von Diphenolen und Iso- und Terephthalsäure erfolgt
durch Umesterung von Estern der Diphenole mit den
aromatischen Dicarbonsäuren in der Schmelze in
der Weise, daß die Ester der Diphenole zunächst
nur mit der Terephthalsäure allein umgesetzt werden
und anschließend, nachdem mindestens 80 % der
Terephthalsäure umgesetzt sind, die Isophthalsäure
zugesetzt wird.

EP 0 313 950 A2

## Verfahren zur Herstellung von aromatischen Polyestern

Die Erfindung betrifft ein Verfahren zur Herstellung von aromatischen Polyestern auf Basis von aromatischen Diphenolen und Iso- und Terephthalsäure durch Umesterung von Estern der Diphenole mit den aromatischen Dicarbonsäuren in der Schmelze.

Die Herstellung von Polyarylaten durch Umesterung in der Schmelze nach dem Acetatverfahren bei Umsetzung von Bisphenol-Diacetaten mit Gemischen aus Iso- und Terephthalsäure ist bekannt. Die Reaktionsführung wird dabei in hohem Maße erschwert durch die Neigung der beiden aromatischen Dicarbonsäuren, besonders der Terephthalsäure, zur Sublimation. Das Sublimat ist nicht abschmelzbar und verstopft in kurzer Zeit die Zu- und Ableitungen der Reaktionsapparaturen.

Zur Vermeidung bzw. Eindämmung der Sublimation ist beispielsweise im US-Patent 3 948 856 und in der europäischen Offenlegungsschrift 26 121 vorgeschlagen worden, ein inertes, hochsiedendes Lösungsmittel, z.B. Diphenylether, bei der Umesterung mitzuverwenden. Ein solches Lösungsmittel ist zwar sehr wirksam bei Zurückdrängung der Sublimation; es hat sich jedoch gezeigt, daß die vollständige Abtrennung dieser Lösungsmittel aus den Polyestern äußerst aufwendig und schwierig ist.

Es wurde nun ein Verfahren zur Herstellung von aromatischen Polyestern auf Basis von Diphenolen und Iso- und Terephthalsäure durch Umesterung von Estern der Diphenole mit den aromatischen Dicarbonsäuren in der Schmelze gefunden, das dadurch gekennzeichnet ist, daß die Ester der Diphenole zunächst nur mit der Terephthalsäure umgesetzt werden und man, nachdem mindestens 70 % der eingesetzten Terephthalsäure umgesetzt sind, die Isophthalsäure der Schmelze zugibt.

Bei dem erfindungsgemäßen Verfahren wird die Terephthalsäure im allgemeinen in Gegenwart eines stöchiometrischen Überschusses des entsprechenden Esters des Diphenols umgesetzt, d.h. es werden etwa 0,1 bis 0,96 Mol Terephthalsäure pro Mol Diphenolester eingesetzt, bevorzugt 0,3 bis 0,8 Mol.

Die Umesterung der Diphenolester mit den aromatischen Dicarbonsäuren in der Schmelze wird üblicherweise bei Temperaturen von etwa 200 bis 350 °C, bevorzugt 230 bis 300 °C, durchgeführt. Die Menge an Isophthalsäure, die der Schmelze zugegeben wird, beträgt im allgemeinen etwa 90 bis 5 Mol-%, vorzugsweise 70-20 Mol-% (bezogen auf Gesamtsäuren).

Bevorzugt wird nach dem erfindungsgemäßen Verfahren die Isophthalsäure der Schmelze dann zugegeben, wenn 80 bis 100 % der eingesetzten Terephthalsäure sich mit den Estern der Diphenole umgesetzt haben.

Bisphenole die zur Herstellung der aromatischen Polyester dienen, sind beispielsweise solche wie sie in der DE-OS 2 940 024 beschrieben sind. Bevorzugt wird Bisphenol A (BPA; 2,2-Bis-4-hydroxyphenyl-propan) eingesetzt.

Die Herstellung der Ester der Diphenole, z.B. die Diphenol-Diacetate, ist bekannt. Beispielsweise können die Bisphenol-Diacetate durch Umsetzung von Bisphenolen mit Acetanhydrid hergestellt werden, wie in den europäischen Offenlegungsschriften 26 121, 26 684 und 28 030 beschrieben. Die Bisphenol-Diacetate können auch in Gegenwart von Terephthalsäure hergestellt werden.

Die erfindungsgemäße Umesterung in der Schmelze kann mit oder ohne Katalysatoren durchgeführt werden. Zur Beschleunigung der Umesterung ist es vorteilhaft, Metallverbindungen in Mengen bis zu 3 Gew.-%, bezogen auf die eingesetzten Diphenole, zuzusetzen. Bevorzugt sind Mengen von 0,001 bis 1 Gew.-%, bezogen auf die eingesetzten Diphenole. Als Metallverbindungen, die als Katalysatoren dienen, werden beispielsweise genannt: Zinkacetat, Magnesiumacetat, Tetraisopropyltitanat und Diethylstannat.

Da die aromatischen Polyester hohe Schmelzviskositäten besitzen, ist ihre Herstellung in mit Rührern ausgestatteten Glaskolben oder Stahlkesseln schwierig. Deshalb werden in solchen Rührapparaturen vorzugsweise nur leicht rührbare Vorkondensate oder Oligomere mit relativen Lösungsviskositäten von ca. 1,06 bis 1,15 (gemessen an einer Lösung von 0,5 g Ester in 100 ml Lösung bei 25 °C; als Lösungsmittel dienen $CH_2Cl_2$ oder 1:1-Gemische aus Phenol und o-Dichlorbenzol) hergestellt. Die Weiterkondensation kann dann beispielswiese in der Schmelze in einem Vakuumextruder, bei Kleinstmengen im Labor im Glaskolben mit starkem Rührer erfolgen. Außerdem ist die Nachkondensation in der festen Phase möglich. Die fertigen aromtischen Polyester besitzen in der Regel relative Lösungsviskositäten von 1,18 bis 2,0, vorzugsweise von 1,2 bis 1,6 (gemessen in den oben genannten Lösungsmitteln).

Die nach dem erfindungsgemäßen Verfahren hergestellten aromatischen Polyester können in üblichen Verarbeitungsmaschinen durch Extrusion zu Halbzeug und durch Spritzgießen zu Formteilen verarbeitet werden. Weiterhin können die Polyarylate anderen Polymeren zugemischt werden zur Verbesserung von deren Eigenschaften.

## Beispiel 1

Herstellung eines Polyarylates aus Bisphenol A und äquimolaren Mengen Iso- und Terephthalsäure
34,2 g (0,15 Mol) Bisphenol A und
33,7 g (0,33 Mol) Acetanhydrid
wurden in einen Dreihalskolben mit Rührer, 20 cm langer Vigreux-Kolonne und Destillationsbrücke gefüllt und unter $N_2$ 1/2 Stunde unter Rückfluß erhitzt. Dann destillierte die entstehende Essigsäure ab. Anschließend wurde das überschüssige Acetanhydrid bei 100 mbar und 130° C Sumpftemperatur abdestilliert.

Zu dem auf diese Weise erhaltenen BPA-Diacetat wurden 12,71 g (0,0765 Mol) Terephthalsäure gegeben und unter $N_2$ bei 200° C und Normaldruck weitergerührt. Es ging wieder Essigsäure über. Die Reaktionstemperatur wurde innerhalb 3,5 Stunden kontinuierlich auf 260° C angehoben. Während dieser zeit wurde das sich an der Kolbenwand oberhalb des Heizbades bildende Sublimat in Abständen von 1 Stunde mit einem Heißluftgenerator abgeschmolzen.

Nach Erreichen von 260° C wurde auf 240° C abgekühlt und 12,71 g (0,0765 Mol) Isophthalsäure zugegeben, die Temperatur innerhalb von 5 Stunden auf 320° C angehoben. Bei Erreichen von 280° C wurde Vakuum von 20 mbar angelegt.

Auch während der Einkondensation der Isophthalsäure ließ sich das Sublimat von der Kolbenwand leicht abschmelzen.

Bei Erreichen von 320° C war die erhaltene Schmelze sehr zähflüssig geworden. Sie ließ sich mit dem verwendeten Glasrührer nicht mehr bewegen. Die Kondensation wurde deshalb abgebrochen. Das erhaltene Produkt war in Methylenchlorid leicht löslich. Die relative Lösungsviskosität (gemessen an einer ($CH_2Cl_2$-Lösung bei 25° C) betrug 1,13. Der Polyester war noch spröde und deshalb leicht zu mahlen. 20 g des erhaltenen Polyesters wurden in einem Glaskolben mit Stahlrührer unter $N_2$ bei 340° C 2,5 Stunden gerührt. Dabei stieg die relative Lösungsviskosität ($\eta_{rel}$) des Produktes auf 1,3767

Zum Vergleich wurden bei einem weiteren Versuch gleicher Art dem BPA-Diacetat beide Dicarbonsäuren gemeinsam zugesetzt, die Temperatur in einem Zuge innerhalb 7 Stunden auf 320° C gebracht. In diesem Falle war das Sublimat nicht abschmelzbar. Da durch die Sublimation die Schmelze an aromatischen Dicarbonsäuren verarmte, ließ sich kein ausreichendes Molgewicht erzielen ($\eta_{rel}$ = 1,234 nach der Nachkondensation).

## Beispiel 2

Herstellung eines Polyarylates aus Bisphenol A und Iso- und Terephthalsäure im Verhältnis 30:70

Es wurde verfahren wie bei Beispiel 1 beschrieben, dem zunächst erhaltenen Diacetat dann 17,8 g (0,107 Mol) Terephthalsäure zugesetzt und in diesem Falle die Temperatur innerhalb von 3,5 Stunden auf 275° C gebracht.

Es wurden dann 7,63 g (0,046 Mol) Isophthalsäure zugesetzt und weiter verfahren wie bei Beispiel 1 beschrieben. Der erhaltene Polyester besaß eine relative Lösungsviskosität (diesmal im Lösungsmittel Phenol/o-Dichlorbenzol gemessen) von 1,126, nach Nachkondensation von 1,385.

Auch in diesem Falle war das Sublimat abschmelzbar, bei einem Vergleichsversuch mit gemeinsamer Zugabe der Dicarbonsäuren jedoch nicht. Bei der Nachkondensation konnte ein $\eta_{rel}$-Wert von nur 1,228 erreicht werden.

## Ansprüche

1. Verfahren zur Herstellung von aromatischen Polyestern auf Basis von aromatischen Diphenolen und Iso- und Terephthalsäure durch Umesterung von Estern der Diphenole mit den aromatischen Dicarbonsäuren in der Schmelze, dadurch gekennzeichnet, daß die Ester der Diphenole zunächst nur mit der Terephthalsäure umgesetzt werden und man, nachdem mindestens 70 % der eingesetzten Terephthalsäure. umgesetzt sind, die Isophthalsäure der Schmelze zugibt.

2. Verfahren nach Anspruch 1, dadurch gekennzeichnet, daß als Ester der Diphenole die entsprechenden Diacetate eingesetzt werden.

3. Verfahren nach den Ansprüchen 1 und 2, dadurch gekennzeichnet, daß als Ester der Diphenole Bisphenol A-Diacetat eingesetzt wird.

4. Verfahren nach Ansprüchen 1 bis 3, dadurch gekennzeichnet, daß man die Isophthalsäure der Schmelze zugibt, nachdem 80-100 % der eingesetzten Terephthalsäure umgesetzt sind.